# EUROPEAN PATENT APPLICATION

(11) **EP 2 378 474 A2**
(43) Date of publication of application: **19.10.2011**
(21) Application number: 11003215.8
(22) Date of filing: 15.04.2011
(51) Int. Cl.: G06Q 10/00, G06F 9/44

(54) **Systems and methods for interface management**

(30) Priority: 15.04.2010 US 324303 P; 13.04.2011 US 86118
(71) Applicant: HTC Corporation, Taoyuan County 330 (TW)
(72) Inventor: Lee, Po-Yen, Taoyuan City Taoyuan County 330 (TW); Yeh, Pai-Chang, Taoyuan City Taoyuan County 330 (TW); Chen, Chien-Wen, Taoyuan City Taoyuan County 330 (TW); Lian, Li-Wen, Taoyuan City Taoyuan County 330 (TW)
(74) Representative: Carstens, Dirk Wilhelm

(57) **Abstract**

Methods and systems for interface management are provided. First, a request message, requesting for arrangement information of at least one interface is received from a server, wherein the at least one interface contains at least one object and can be displayed on a screen of an electronic device according to the arrangement information. In response to the request message, respective arrangement information of the at least one interface is obtained and then transmitted to the server, such that a simulated interface of the at least one interface is displayed on a user interface at the server side based on the respective arrangement information received by the server, wherein when a change is made to the simulated interface of the at least one interface at the server side, the arrangement of the at least one interface is accordingly changed.

## Description

### CROSS REFERENCE TO RELATED APPLICATIONS

This Application claims priority of U.S. Provisional Application No. 61/324,303, filed on April 15, 2010, and the entirety of which is incorporated by reference herein.

### BACKGROUND OF THE INVENTION

### Field of the Invention

The disclosure relates generally to interface management, and, more particularly to methods and systems for interface management that manage arrangements of objects of displayed interfaces of an electronic device via a user interface provided by a server.

### Description of the Related Art

Recently, portable devices, such as mobile or handheld devices, have become more and more technically advanced and multifunctional. For example, a mobile device may receive email messages, have an advanced address book management application, allow for media playback, and have various other functions. Because of the conveniences of portable devices with multiple functions, the devices have become necessities of life.

Generally, a handheld device can install a large amount of functions which are implemented as widgets, applications, virtual or physical buttons, or any other kind of executable program code. Due to the size limitation of screens or other classification requirements, only several interfaces, such as menus or pages can be provided in the handheld device. Users can perform a switching operation to switch between the interfaces by using a virtual or physical key, or a touch-sensitive screen.

Conventionally, users can manually configure the arrangement and display of the interfaces on an electronic device. For example, the users may dispose a number of objects, such as widgets, applications, and/or shortcuts, within the interfaces, to arrange the positions of the objects, and add or remove any object to or from originally arranged objects for any interface, by performing a number of operations. Moreover, one of the images representing the interfaces may be displayed on a screen of the handheld device. When the switch operation is performed, another image is displayed on the screen to replace the original image. Generally, it is hard to quickly configure the arrangements of one or more than one interface using a stylus or a finger since the size of a screen provided in a handheld device is small. To enhance the value of devices and increase user experience, it is an objective of the present application to provide easy and applicable interface management systems and methods for electronic devices.

### BRIEF SUMMARY OF THE INVENTION

Methods and systems for interface management are provided.

In an embodiment of a method for interface management, a request message, requesting for arrangement information of at least one interface is received from a server, wherein the at least one interface contains at least one object and can be displayed on a screen of an electronic device according to the arrangement information. In response to the request message, respective arrangement information of the at least one interface is obtained and then transmitted to the server, such that a simulated interface of the at least one interface is displayed on a user interface at the server side based on the respective arrangement information received by the server, wherein when a change is made to the simulated interface of the at least one interface at the server side, the arrangement of the at least one interface is accordingly changed.

An embodiment of a system for interface management comprises a storage unit, a screen, and a processing unit. The storage unit comprises at least one interface, wherein the interface at least comprises one object and arrangement information corresponding thereto. The screen displays the at least one interface according to the arrangement information. The processing unit receives a request message, requesting for arrangement information of at least one interface from a server, and in response to the request message, obtains respective arrangement information of the at least one interface and then transmits the respective arrangement information of the at least one interface to the server, such that a simulated interface of the at least one interface is displayed on a user interface at the server side based on the respective arrangement information received by the server, wherein when a change is made to the simulated interface of the at least one interface at the server side, the arrangement of the at least one interface is accordingly changed.

In some embodiments, the at least one interface comprises a plurality of objects and the respective arrangement information of the at least one interface comprises position information, and a type and/or a name of each of the objects. In some embodiments, the at least one interface is further divided into a plurality of display areas and the respective arrangement information of the at least one interface further comprises information indicating a display area of each object. In some embodiments, the objects comprise at least one background, at least one widget, at least one application icon, or at least one button.

In some embodiments, an updating request message is further received from the server and the objects of each of the at least one interface is rearranged when respective arrangement information corresponding to the at least one interface is indicated by the updating request message. In some embodiments, each of the objects is provided with a timestamp and the arrangement information of the at least one interface and the arrangement information of the simulated interface displayed on the user interface at the server side are further synchronized automatically according to the timestamp of each object and a timestamp of respective objects at the server side.

Methods for interface management may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for interface management of the invention;

Fig. 2 is a schematic diagram illustrating an embodiment of an example of an interface of the invention;

Fig. 3 is a schematic diagram illustrating an embodiment of an example of an interface with multiple display areas of the invention;

Fig. 4 is a schematic diagram illustrating an embodiment of another example of an interface of the invention;

Fig. 5 is a flowchart of an embodiment of a method for interface management of the invention;

Fig. 6 is a schematic diagram illustrating an embodiment of a simulated interface of the interface of Fig. 3 of the invention, which is displayed on a user interface at the server side;

Fig. 7 is a schematic diagram illustrating an embodiment of an example of arrangement information of an interface of the invention; and

Figs. 8A to 8D are schematic diagrams illustrating an embodiment of an example of interface management of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Methods and systems for interface management are provided. Embodiments of the invention provide easy and applicable interface management systems and methods for electronic devices such that users can quickly change the arrangements of one or more than one interface of an electronic device via a user interface (e.g. a specific webpage) at a server side when the electronic device is connected to the server, thus, enhancing the value of devices and increasing user experience.

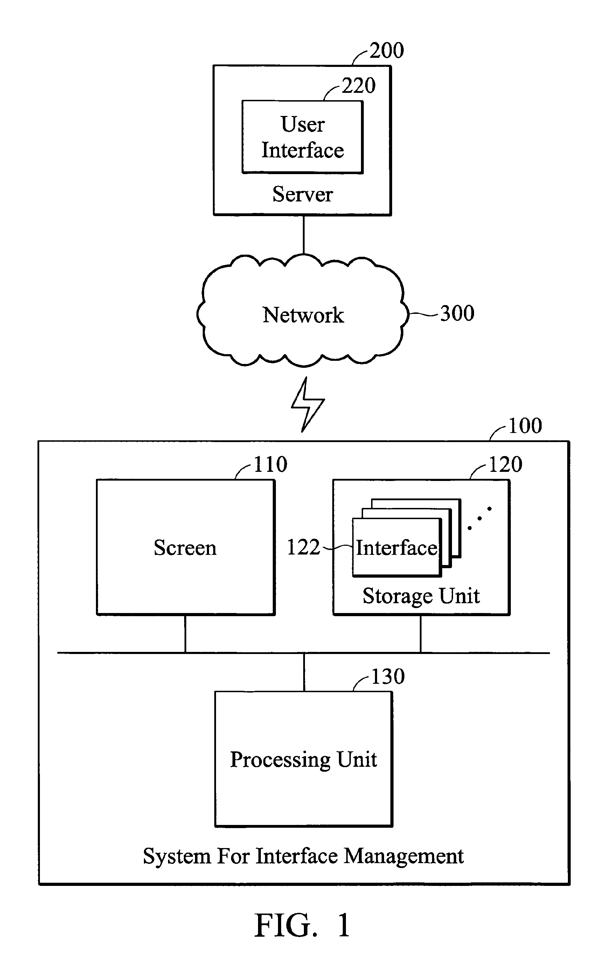

Fig. 1 is a schematic diagram illustrating an embodiment of a system for interface management of the invention. The system for interface management may be used in an electronic device, such as a PDA (Personal Digital Assistant), a PDA phone, a smart phone, a mobile phone, an MID (Mobile Internet Device, MID), a laptop computer, a tablet computer, a car computer, a digital camera, a multi-media player, a game device, or any other type of mobile computational device, however, it is to be understood that the invention is not limited thereto. The system for interface management 100 is capable of being connected to a server 200 via a network 300, such as mobile network (e.g., WCDMA network) or Internet. When connecting to the server 200, the system for interface management 100 can transmit data to or receive data from the server 200.

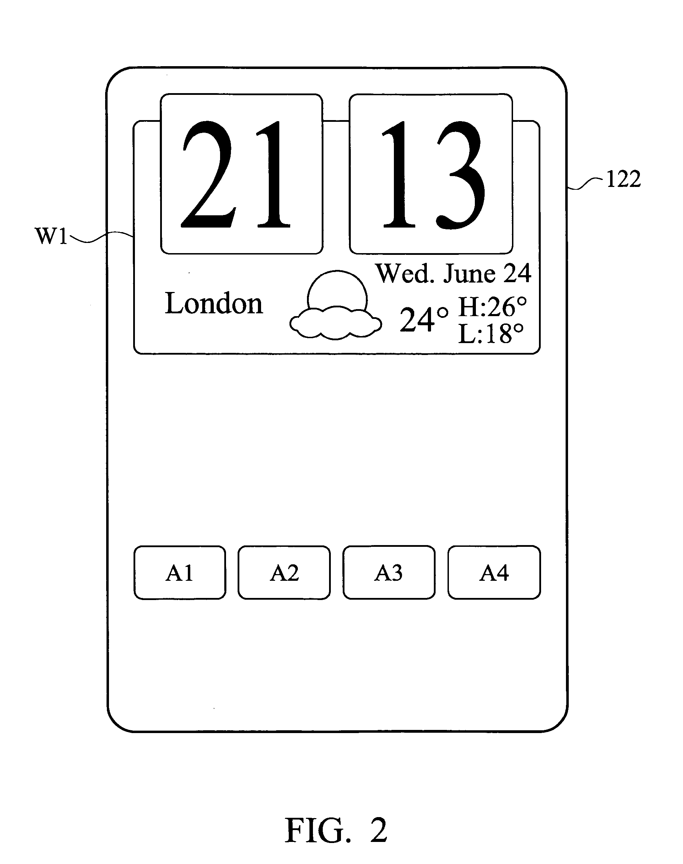

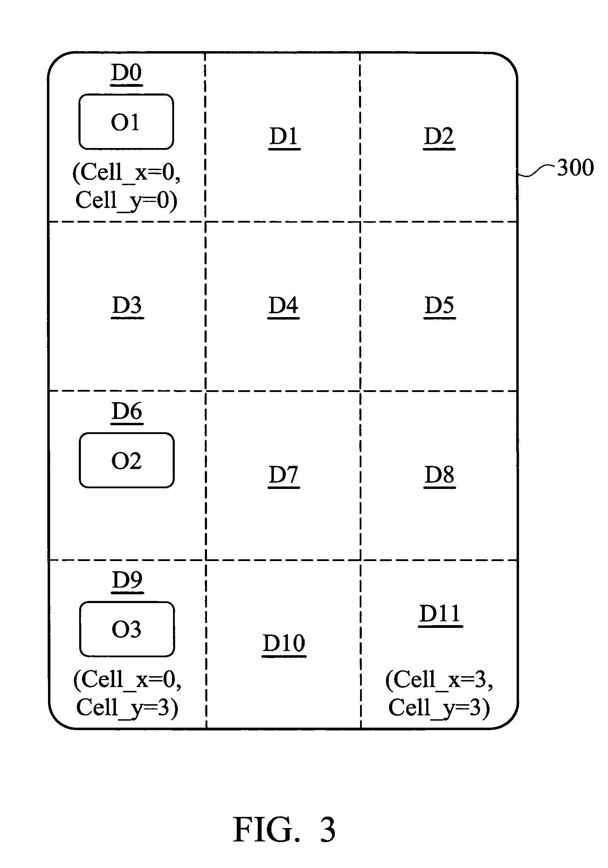

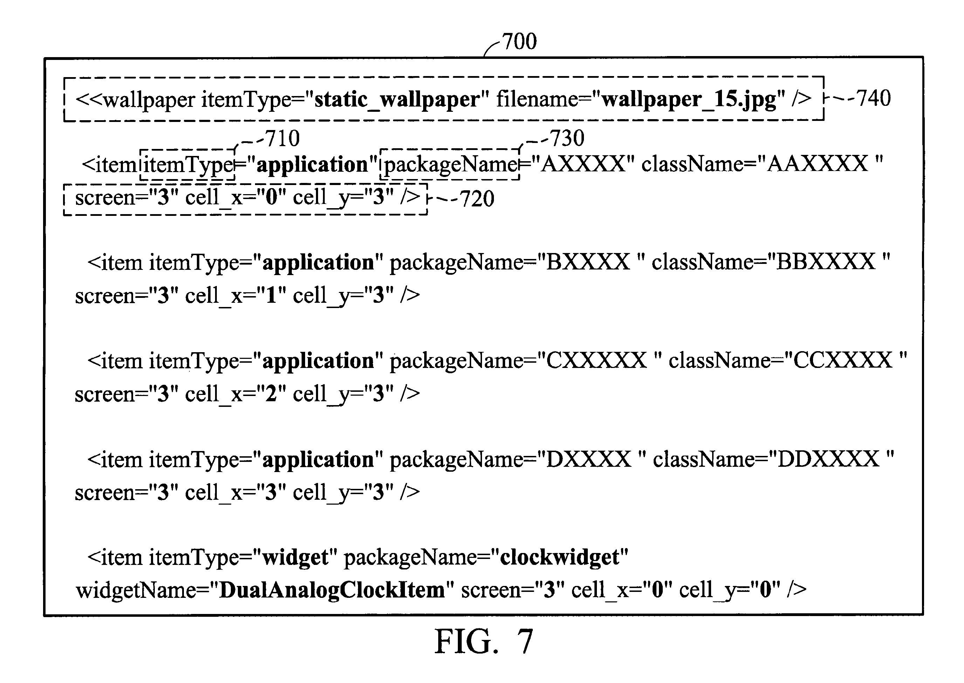

The system for interface management 100 comprises a screen 110, a storage unit 120, and a processing unit 130. The screen 110 can display data, such as texts, figures, interfaces, and/or information. It is understood that, in some embodiments, the screen 110 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. Accordingly, users are able to input commands or signals via the screen. The storage unit 120 comprises a plurality of interfaces 122. For example, respective interface may comprise a number of objects, such as at least one widget, at least one application icon, at least one shortcut of a specific application or folder, and/or at least one button, but it is not limited thereto. Fig. 2 is a schematic diagram illustrating an embodiment of an example of an interface of the invention. As shown in Fig. 2, the interface 122 shows a widget W1 and four application shortcuts or buttons A1~A4, wherein the widget W1 can obtain data, and perform operations to show the results on the interface 122, and related applications or functions can be activated when the application shortcuts or the buttons are selected. It is to be noted that the arrangement information of each interface may comprise, for example, but is not limited to, the number, the type, and/or the position of the objects deployed on the interface such that the screen 110 can display and arrange the interface according to its respective arrangement information. Fig. 7 is a schematic diagram illustrating an embodiment of an example of arrangement information of an interface of the invention. As shown in Fig. 7, the arrangement information 700 comprises the type 710 of the objects (e.g. a widget or an application), the position information 720 of the objects deployed on the interface and the name 730 of the objects, wherein the position information 720 of a specific object may indicate which interface among the interfaces the specific object belongs to and which display area the object located. For example, as shown in Fig. 7, the position information 720 indicates that this specific object belongs to the interface 3, which is the middle interface among all of the interfaces and the specific object is located on the display area D9 shown in Fig.3. In this embodiment, the arrangement information of a respective interface may further comprise the wallpaper information 740 which will be displayed as the background of the interface.

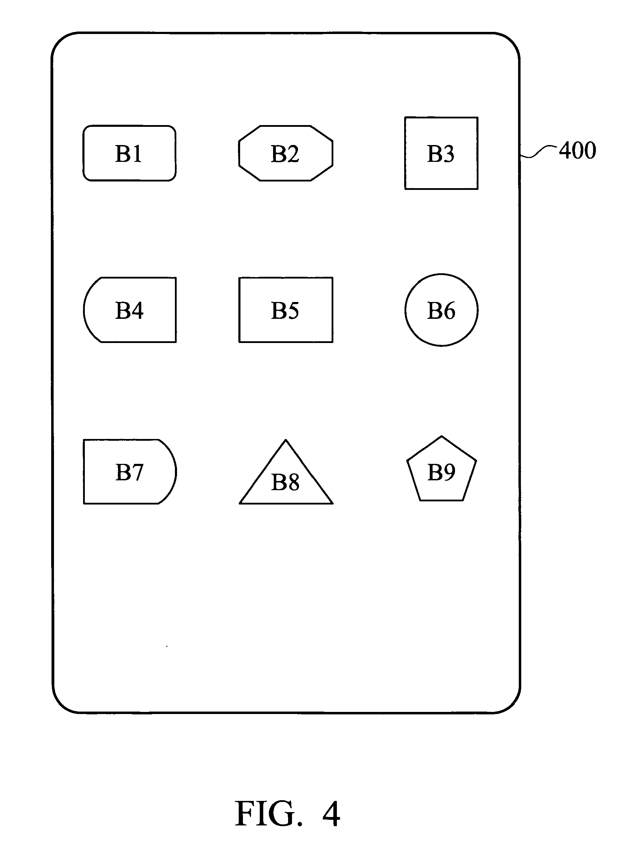

It is understood that, in some embodiments, the respective interface may correspond to a menu of the electronic device, wherein the plurality of objects of the respective interface are deployed to be displayed in a specific arrangement. Each specific interface may be divided into a number of display areas and each object of the specific interface is arranged to be deployed to be displayed in a specific display area. Fig. 3 is a schematic diagram illustrating an embodiment of an example of an interface with multiple display areas of the invention. As shown in Fig. 3, the interface 300 has been divided into twelve display areas D0-D11, in which object O1 is deployed to be displayed in the display area D0, object 02 is deployed to be displayed in the display area D6, and object 03 is deployed to be displayed in the display area D9. It is understood that, while objects are deployed in different display areas, the arrangement of the interface 300 can be viewed via the screen and recorded in the storage unit 120. It is noted that, each arrangement of a respective interface may be recorded in the storage unit 120 and displayed on a screen when the interfaces are switched. In some embodiments, the arrangement information of the interfaces can be configured in advance, and stored in a database of the storage unit 120. For example, when the screen 110 displays the interface 300 in Fig. 3, and a user slides a finger on the screen 110, a specific interface 400 with objects B1-B9 can be displayed in the screen 110, as shown in Fig. 4.

The processing unit 130 can perform the method for interface management of the present invention, which will be discussed further in the following paragraphs. The server 200 may further comprise at least one user interface 220. The user interface 220 may display related data, such as texts, figures, interfaces, and/or related information, and users are able to input related commands or signals via the user interface 220.

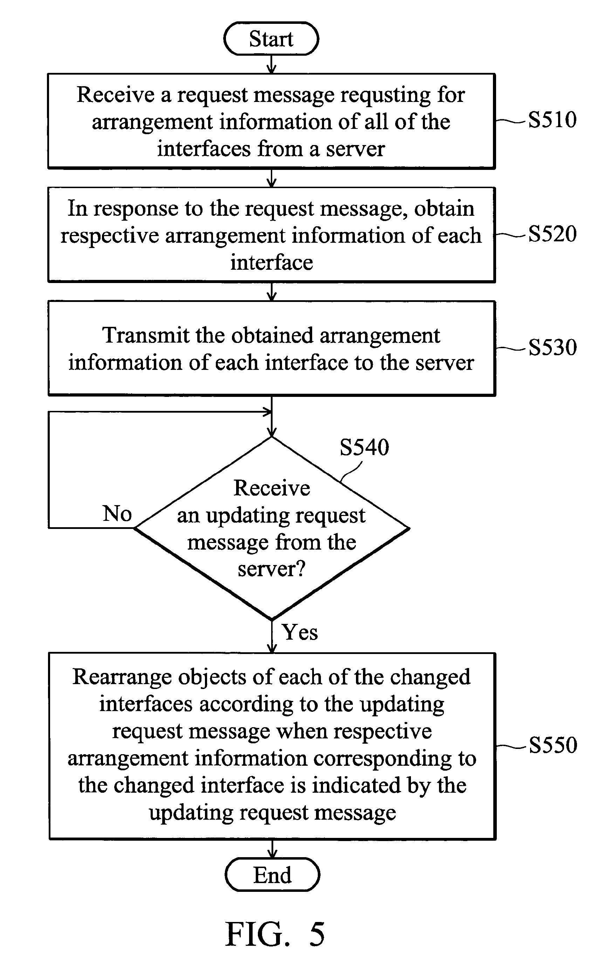

Fig. 5 is a flowchart of an embodiment of a method for interface management of the invention. The method for interface management can be used in an electronic device, such as a PDA, a PDA phone, a smart phone, a mobile phone, an MID, a laptop computer, a tablet computer, a car computer, a digital camera, a multi-media player, a game device, or any other type of mobile computational device, however, it is to be understood that the invention is not limited thereto.

In step S510, a request message, requesting for arrangement information of all of the interfaces is received from the server 200, wherein each of the interfaces can be displayed on the screen of an electronic device. It is to be noted that, the processing unit 130 may first perform a registration procedure to login to the server 200 by using a specific account before it is able to receive data from or transmit data to the server 200. During the registration procedure, the server 200 may determine whether the user is an authorized user by inspecting whether the specific account is one of the registered accounts stored in the server 200 and the electronic device is allowed to communicate with the server 200 only if the specific account is one of the registered accounts. After the electronic device has successfully logged on to the server 200, the server 200 sends the request message, requesting for arrangement information of the interfaces to the electronic device. It is understood that, in some embodiments, the respective interface may comprise a plurality of objects deployed to be displayed via the screen and the arrangement information of each interface may comprise the number, the type, and/or the position of the objects deployed on the interface. It is understood that, in some embodiments, the respective interface may correspond to a menu of the electronic device. In some embodiments, the objects of the respective interface can comprise at least one widget, at least one application icon, at least one shortcut of a specific application or folder, and/or at least one button, but it is not limited thereto. In some embodiments, the respective interface can further comprise the wallpaper which will be displayed as a background of the interface and the arrangement information of the respective interface can comprise the wallpaper information. In some embodiments, the wallpaper may have an equal height and length, such as 1024x1024.

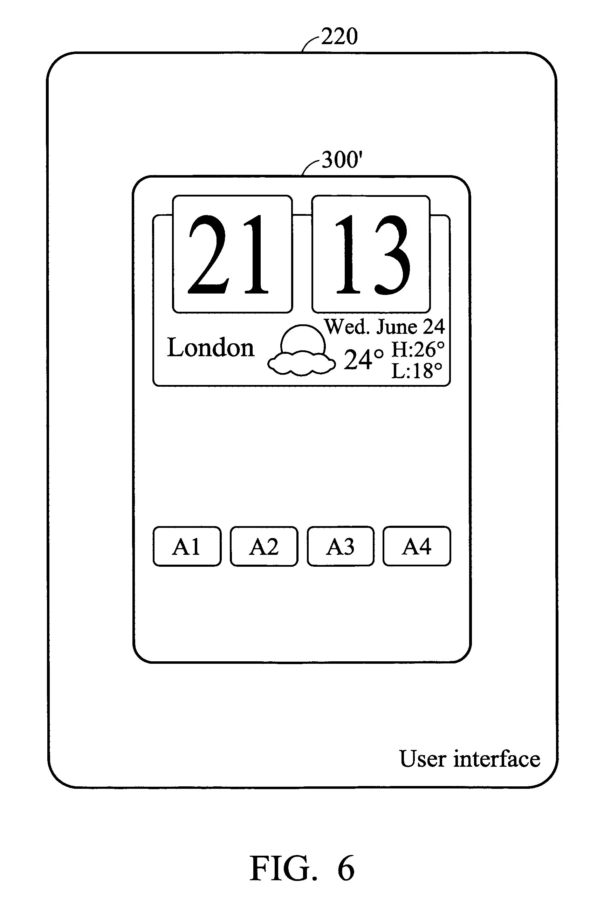

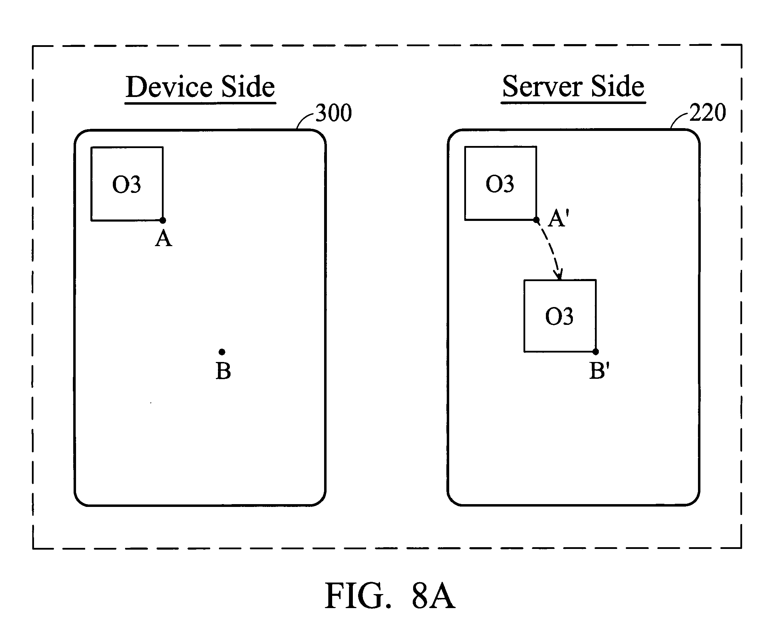

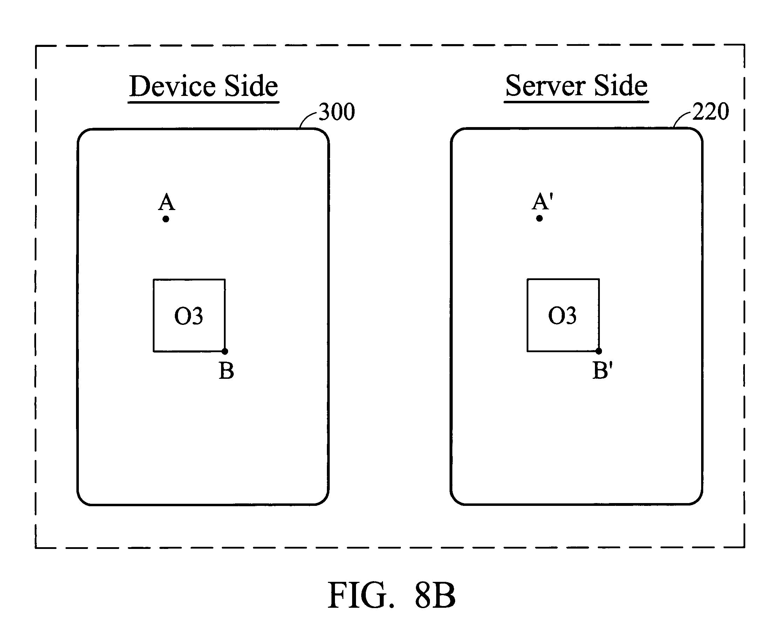

Referring to Fig. 5, in step S520, in response to the request message, respective arrangement information of each interface is obtained. It is to be noted that, the respective arrangement information of each interface may be stored in the database of the storage unit 120 so that the processing unit 130 may obtain the respective arrangement information of each interface from the database of the storage unit 120. It is understood that, in some embodiments, a default interface will be displayed on the screen when the electronic device is activated, or a specific interface will be displayed on the screen when the electronic device is resumed from a specific state, in which the specific interface is the final interface of the specific state. After the respective arrangement information of each interface has been obtained, in step S530, a reply message containing the respective arrangement information of each interface is transmitted to the server 200. Upon reception of the reply message containing the respective arrangement information of each interface from the electronic device, a simulated interface of each interface is displayed on the user interface 220 at the server 200 side based on the respective arrangement information received by the server 200. For example, if an interface 300 is arranged as shown in Fig.3, the simulated interface 300' of the interface 300 is displayed on the user interface 220 at the server 200 side, as shown in Fig. 6. In other words, the interface 300 can be rebuilt at the server 200 side via the user interface 220. It is understood that, in this embodiment, all of the interfaces can be displayed together on a single page of the user interface 220, such that the user may then rearrange the arrangement of one or more interfaces via the input units (e.g. a keyboard or a mouse) of the user interface 220 at the server 200 side rather than rearranging via the object (e.g. a pen/stylus or finger) on the electronic device. When a change is made to the simulated interface 300' of the interface 300 at the server 200 side, the arrangement of the interface 300 at the electronic device will be accordingly changed. For example, referring to Figs. 8A and 8B, when the user wishes to change the position of the object 03 of the interface 300 from point A to point B, the user may simply select the object 03 at respective point A' on the user interface 220, drag and drop the object 03 to the point B', e.g. using a mouse, (Fig. 8A), and the object 03 of the interface 300 on the electronic device will then be accordingly changed from point A to pint B, as shown in Fig. 8B. It is understood that, the server 200 will transmit an update message to the electronic device whenever it detects that the arrangement of the simulated interface 300' of the interface 300 has been changed or a predetermined sync period has been reached.

Referring to Fig. 5, in step S540, it is then determined whether an updating request message is received from the server 200. The updating request message may further comprise the arrangement information of each interface or may only indicate the arrangement information of each changed interface. If no updating message has been received (No in step S540), the procedure returns to step S540. When the updating message is received (Yes in step S540), which means that the arrangements of some interfaces may have been changed, in step S550, the objects of each of the changed interfaces are rearranged according to the updating request message when respective arrangement information corresponding to the changed interface is indicated by the updating request message. In this step, the updating message may comprise the arrangement information of each changed interface so that each changed interface can be rearranged according to the respective arrangement information indicated by the updating request message.

In some embodiments, after the server 200 and the electronic device have been synchronized, the user may directly change the arrangement of a specific interface on the electronic device or change the arrangement of the specific interface via the user interface at the server 200 side, such that the arrangement information recorded in the storage unit 120 and the server 200 are inconsistent. Therefore, a timestamp is further provided to each of the objects to indicate when an object has been changed. The arrangement information of the specific interface and the arrangement information of the simulated interface displayed on the user interface 220 at the server 200 side are synchronized to each other according to the timestamp of each object and a timestamp of respective objects at the server 200 side.

In one embodiment, one of the objects of at least one interface is rearranged according to a respective object displayed on the simulated interface when the respective timestamp of the object is older than that of the respective object on the simulated interface. For example, if a specific object of at least one interface has a timestamp of 2pm and the respective object displayed on the simulated interface has a timestamp of 3pm, the specific object of at least one interface is rearranged according to the arrangement information of the respective object displayed on the simulated interface. In another embodiment, one of the objects of the at least one interface is not changed when the respective timestamp of the object is newer than that of the respective object on the simulated interface. In some embodiments, the one of the objects of the simulated interface is changed according to a respective object displayed on the interface when the respective timestamp of the object is newer than that of the respective object on the simulated interface. For example, if a specific object of at least one interface has a timestamp of 3pm and the respective object displayed on the simulated interface has a timestamp of 2pm, the one of the objects of the simulated interface is changed according to the respective object displayed on the interface.

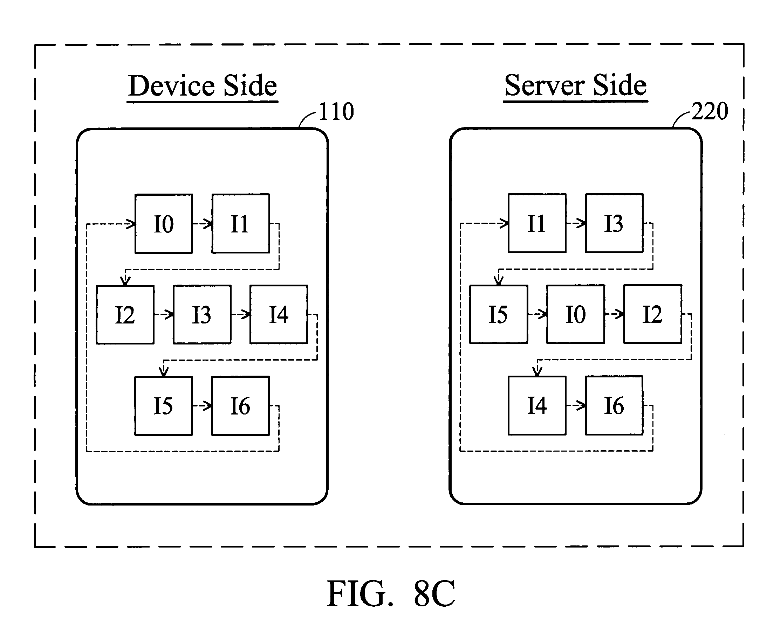

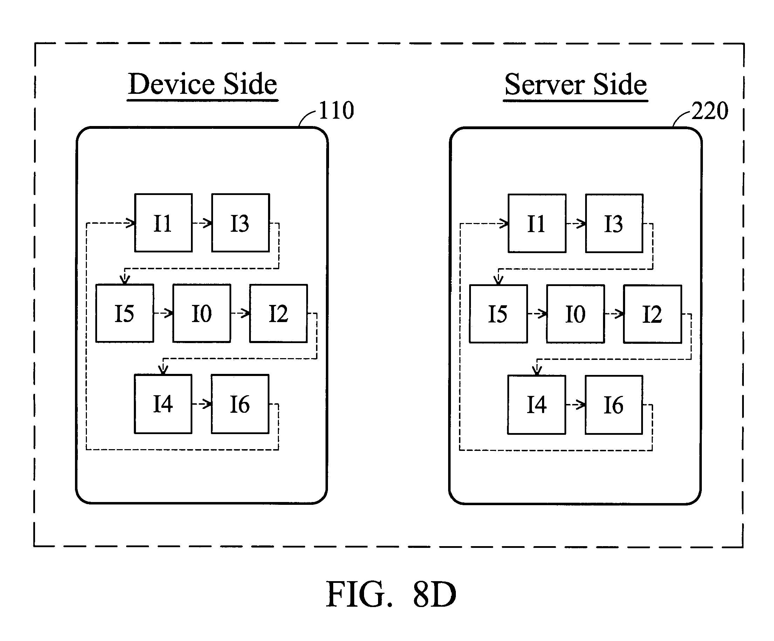

It is understood that, in some embodiments, the interfaces can be arranged in sequence and the user may further rearrange the order of each interface by the user interface 220 at the server 200 side. Referring to Figs. 8C-8D, which are schematic diagrams illustrating an embodiment of an example of interface management of the invention. For example, in the example of Fig. 8C, the interfaces 10-16 are arranged in a sequence 10-16 at the device side and the interfaces 10-16 are rearranged to a new sequence I1, I3, I5, I0, I2, I4 and I6 via the user interface 220 at the server 200 side, such that the interfaces I0~I6 at the device side are rearranged to the new sequence I1, I3, I5, I0, I2, I4 and I6 as same as the server side, as shown in Fig. 8D. It is understood that, in some embodiments, the arrangement information of the interfaces can be automatically synchronized between the electronic device and the server 200 upon detection of any change made at the device side and the server 200 or upon each predetermined fixed sync period.

Therefore, the methods and systems for interface management can quickly change the arrangements of one or more than one interface of the electronic device via a user interface at a server side, thus, enhancing the value of devices and increasing user experience.

Methods for interface management, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A computer-implemented method for interface management, for use in an electronic device, comprising:
receiving a request message, requesting for arrangement information of at
least one interface from a server, wherein the at least one interface contains at least one object and can be displayed on a screen of the electronic device according to the arrangement information;
in response to the request message, obtaining respective arrangement
information of the at least one interface; and
transmitting the respective arrangement information of the at least one
interface to the server, such that a simulated interface of the at least one interface is displayed on a user interface at the server side based on the respective arrangement information received by the server,
wherein when a change is made to the simulated interface of the at least one
interface at the server side, the arrangement of the at least one interface is accordingly changed.

2. The method of claim 1, wherein the at least one interface comprises a plurality of objects and the respective arrangement information of the at least one interface comprises position information, and a type, and/or a name of each of the objects.

3. The method of claim 2, wherein the objects comprise at least one background, at least one widget, at least one application icon, or at least one button.

4. The method of claim 2 or 3, further comprising:
receiving an updating request message from the server; and
rearranging the objects of each of the at least one interface when respective
arrangement information corresponding to the at least one interface is indicated by the updating request message.

5. The method of claim 4, further comprising:
providing a timestamp to each of the objects; and
synchronizing the arrangement information of the at least one interface and the
arrangement information of the simulated interface displayed on the user interface at the server side according to the timestamp of each object and a timestamp of respective objects at the server side.

6. The method of claim 5, wherein one of the objects of the at least one interface is rearranged according to a respective object displayed on the simulated interface when the respective timestamp of the object is older than that of the respective object on the simulated interface.

7. The method of claim 6, wherein the at least one interface is further divided into a plurality of display areas and the respective arrangement information of the at least one interface comprises information indicating a display area of each object.

8. A machine-readable storage medium comprising a computer program, which, when executed, causes a device to perform the method of any one of claims 1 to 7.

9. A system for interface management for use in an electronic device, comprising:
a storage unit comprising at least one interface, wherein the interface at least
comprises one object and arrangement information corresponding thereto;
a screen displaying the at least one interface according to the arrangement
information; and
a processing unit receiving a request message, requesting for the arrangement
information of the at least one interface from a server, obtaining respective arrangement information of the at least one interface in response to the request message, and transmitting the respective arrangement information of the at least one interface to the server,
such that a simulated interface of the at least one interface is displayed on a
user interface at the server side based on the respective arrangement information received by the server,
wherein when a change is made to the simulated interface of the at least one
interface at the server side, the arrangement of the at least one interface is accordingly changed.

10. The system of claim 9, wherein the at least one interface comprises a plurality of objects and the respective arrangement information of the at least one interface comprises position information, and a type and/or a name of each of the objects.

11. The system of claim 10, wherein the objects comprise at least one background, at least one widget, at least one application icon, or at least one button.

12. The system of claim 10 or 11, wherein the processing unit further receives an updating request message from the server and rearranges the objects of each of the at least one interface when respective arrangement information corresponding to the at least one interface is indicated by the updating request message.

13. The system of claim 12, wherein each of the objects is provided with a timestamp and the processing unit further synchronizes the arrangement information of the at least one interface and the arrangement information of the simulated interface displayed on the user interface at the server side according to the timestamp of each object and a timestamp of respective objects at the server side.

14. The system of claim 13, wherein one of the objects of the at least one interface is rearranged according to a respective object displayed on the simulated interface when the respective timestamp of the object is older than that of the respective object on the simulated interface.

15. The system of claim 14, wherein the one of the objects of the at least one interface is unchanged when the respective timestamp of the object is newer than that of the respective object on the simulated interface.
